# EUROPÄISCHE PATENTSCHRIFT

(11) **EP 3 573 855 B1**
(45) Veröffentlichungstag und Bekanntmachung des Hinweises auf die Patenterteilung: **09.12.2026**
(21) Anmeldenummer: 18725479.2
(22) Anmeldetag: 16.05.2018
(51) Int. Cl.: B60L 5/08, B60M 1/02

(54) **VORRICHTUNG UND VERFAHREN ZUR ERKENNUNG DES VERSCHLEISSES EINES SCHLEIFKONTAKTES UND SCHLEIFLEITUNGSSYSTEM**
DEVICE AND METHOD FOR THE DETECTION OF WEAR ON A SLIDING CONTACT AND BRUSHGEAR SYSTEM
DISPOSITIF ET PROCÉDÉ DE RECONNAISSANCE DE L'USURE D'UN CONTACT À GLISSEMENT ET SYSTÈME DE LIGNE DE CONTACT

(30) Priorität: 13.07.2017 DE 102017115744
(43) Veröffentlichungstag der Anmeldung: 04.12.2019
(73) Patentinhaber: Conductix-Wampfler GmbH, 79576 Weil am Rhein (DE)
(72) Erfinder: ENDLER, Niklas, 79739 Schwörstadt (DE); HAGIN, Moritz, 79576 Weil am Rhein (DE); WINTER, Nicholas, 79540 Lörrach (DE)
(74) Vertreter: Charrier Rapp & Liebau
(86) Internationale Anmeldenummer: PCT/EP2018/062687
(87) Internationale Veröffentlichungsnummer: WO 2019/011508

(56) Entgegenhaltungen:
- CN-A- 103 561 972
- DE-A1- 102011 005 302
- DE-A1- 102013 214 022
- DE-A1- 3 215 251
- JP-A- 2010 143 450
- JP-A- H03 261 303
- JP-U- S6 034 701
- TW-A- 201 223 797

## Beschreibung

Die Erfindung betrifft eine Vorrichtung zur Erkennung des Verschleißes eines längs einer Schleifleitung verfahrbaren Schleifkontaktes nach dem Oberbegriff des Anspruchs 1, ein Schleifleitungssystem nach dem Oberbegriff des Anspruchs 6 sowie ein Verfahren zur Erkennung des Verschleißes eines längs einer Schleifleitung verfahrbaren Schleifkontaktes nach dem Oberbegriff des Anspruchs 10.

Bei bekannten Schleifleitungssystemen wird längs einer ortsfest installierten Schleifleitung ein Stromabnehmer eines verfahrbaren elektrischen Verbrauchers entlanggeführt. Der Stromabnehmer hält in einem Schleifkontaktträger einen Schleifkontakt, bevorzugt eine Schleifenkohle, der eine elektrisch leitende Schleiffläche an der Schleifleitung kontaktiert. Durch die Bewegung des Schleifkontakts an der Schleifleitung und durch die Übertragung von elektrischer Energie über diese kontaktbehaftete Verbindung nutzt sich der Schleifkontakt im Lauf der Zeit ab. Um dennoch einen sicheren Sitz des Schleifkontakts an der Schleifleitung sicherzustellen, wird der Schleifkontakt über einen üblicherweise federbewirkten Zustellmechanismus ständig in Richtung Schleifleitung gedrückt, wodurch jedoch der Abrieb des Schleifkontakts verstärkt wird. Somit bewegt sich der Schleifkontaktträger dem immer kürzer werdenden Schleifkontakt sukzessive in Richtung der Schleifleitung.

Um eine zuverlässige und ununterbrochene Energieübertragung zum elektrischen Verbraucher sicherstellen zu können, besteht der Wunsch, den Verschleiß des Schleifkontakts zu überwachen und dem Betreiber des Schleifleitungssystems rechtzeitig mitzuteilen, dass der Schleifkontakt bald vollständig verbraucht ist. Dann kann der Betreiber des Schleifleitungssystems rechtzeitig neue Schleifkontakte ordern und den abgenutzten Schleifleitungskontakten austauschen.

Ein Beispiel hierfür offenbart die DE 32 15 251 C2 in Form eines auf die fortgeschrittene Abnutzung der Schleifekohle von Bestandteil von Schleifenleitungen bildenden Stromabnehmern ansprechenden Impulsauslöser. Der Impulsauslöser wird gebildet durch eine an der Rückseite der Schleifeleitung quer zur Schleifleitung sich erstreckenden Welle, einen seitlich aus dem Stromabnehmer vorspringenden Anschlag, einem auf der Welle angeordneten Bolzen, der seitlich an der Schleifleitung vorbei in Richtung auf die Stromabnehmerseite bis auf ein Niveau ragt, auf dem sich der Stromabnehmer zugeordnete Anschlag bei abgenutzter Schleifekohle befindet, und einem Betätigungsglied, das bei gegen die Wirkung einer Rückstellfeder erfolgter Drehung der Welle einen Schalter betätigt.

Diese Lösung weist den Nachteil auf, dass eine mechanische Kontaktierung zwischen dem Impulsauslöser und dem Stromabnehmer erfolgen muss. Eine solche mechanische Betätigung des Impulsauslösers kann aber auch durch unachtsames Bedienpersonal, Tiere oder Gegenstände ausgelöst werden. Weiter besteht gerade beim Einsatz in korrosionsgefährdeten Gebieten, beispielsweise in großen Hafenanlagen mit salzhaltige Meeresluft, die Gefahr, dass die beweglichen Teile des Impulsauslöser im Lauf der Zeit korrodieren und dann nicht mehr korrekt auslösen können. Im ungünstigen Fall lässt sich der Schalter des Impulsauslösers gar nicht mehr bewegen, so dass der Stromabnehmer blockiert oder aus der Schleifleitung abgehoben wird.

Die JP2010 143450 offenbart eine Schleifleitungsabnutzungsvorrichtung, bei der ein Sensor seitlich die Seitenwangen eines Schleifleitungskontaktes detektiert. Die Detektion erfolgt dabei über einen Lichtsensor, der weiter keine Daten übertragen kann.

Die JP03-261303 offenbart einen Abstandssensor zum Detektieren der Abrasion, welcher den Abstand eines Stromabnehmers zu einer Schleifleitung misst. Diese forderte eine aufwändige Konstruktion und eine genaue Messung des Abstands auf dem Stromabnehmerwagen, was mit zusätzlichem Aufwand für die Verkabelung im Stromabnehmerwagen verbunden ist.

Die JP S 60-34701 U offenbart einen Pantographen-Stromabnehmer, der zur Detektion des Abriebs einer Schleifleitung eine federbeaufschlagte Bügelanordnung aufweist. Dies ist konstruktiv aufwendig und ermöglicht lediglich die Detektion des Abstands des Stromabnehmers von der Schleifleitung.

Die DE 10 2013 214 022 betrifft ein System zur Zustandserfassung eines Stromabnehmers, wobei dort eine Videokameraeinrichtung zur digitalen Bildaufnahme des Stromausnehmers und eine Bildauswertungseinrichtung zur datentechnischen Auswertung der Bildaufnahmen vorgesehen ist. Die Bildauswertung ist oft mit Aufnahmefehlern behaftet, und erfordert eine sehr hohe Rechenleistung, um eine effiziente Überwachung durchführen zu können. Dies ist sowohl betrieblich als auch kostenmäßig aufwendig.

Die TW 2012 23797 betrifft eine Vorrichtung zu Detektion des Abriebs einer Kupferschleifleitungsbürste und weist einen Abstandssensor auf, der den Abstand zu dem Kupferschleifstück misst. Durch den Abrieb am Kupferschleifstück ändert sich der Abstand zum Sensor, sodass hierüber die Abnutzung bestimmt werden kann. Weitere Möglichkeiten, insbesondere eine genaue Identifikation des betreffenden Schleifstücks ermöglicht diese Vorrichtung nicht.

Die DE 10 2011 005 302 A1 wie auch die CN 103 561 972 betreffen ein Verschleißerkennungssystem umfassend zumindest ein konsumierbares Reibelement und eine Transpondereinheit, wobei die Transpondereinheit mit einer Sende-Empfangseinheit drahtlos kommunizieren kann, wobei das Verschleißerkennungssystem eine Abschirmeinrichtung aufweist, wobei die Abschirmeinrichtung so ausgebildet ist, dass mittels der Abschirmeinrichtung die Transpondereinheit in Abhängigkeit eines Verschleißzustandes des Reibelements zumindest teilweise abschirmbar ist, derart, dass eine Kommunikation zwischen der Transpondereinheit und der Sende-Empfangseinheit beeinflussbar ist.

Aufgabe der Erfindung ist es deshalb, eine Vorrichtung und ein Verfahren zur Erkennung des Verschleißes eines längs einer Schleifleitung verfahrbaren Schleifkontaktes sowie ein Schleifleitungssystem bereitzustellen, welche die oben genannten Nachteile überwinden und eine einfache, zuverlässige und frühzeitige Erkennung der fast vollständigen Abnutzung des Schleifkontaktes ermöglichen.

Die Erfindung löst diese Aufgabe durch eine Vorrichtung zur Erkennung des Verschleißes eines längs einer Schleifleitung verfahrbaren Schleifkontaktes mit den Merkmalen des Anspruchs 1, ein Schleifleitungssystem mit den Merkmalen des Anspruchs 6 sowie ein Verfahren zur Erkennung des Verschleißes eines längs einer Schleifleitung verfahrbaren Schleifkontaktes mit den Merkmalen des Anspruchs 10. Vorteilhafte Weiterbildungen und Ausgestaltungen der Erfindung sind in den Unteransprüchen angegeben.

Erfindungsgemäß ist eine eingangs genannte Vorrichtung zur Erkennung des Verschleißes eines längs einer Schleifleitung verfahrbaren Schleifkontaktes so eingerichtet, dass der Sensor ein Schreib- und/oder Lesegerät, nämlich ein RFID-Schreib- und/oder Lesegerät, und der Messindikator einen berührungslos auslesbaren und/oder beschreibbaren Datenträger, nämlich einen RFID-Transponder, aufweist. Hierdurch kann nicht nur die Annäherung des Messindikators an den Sensor einfach erfasst werden, sondern es können auf dem Messindikator noch weitere Informationen gespeichert und im Verschleißfall ausgelesen werden, z.B. um was für einen Schleifkontakt und/oder von welchem Schleifkontaktträger es sich handelt. Weiter kann auf diese Weise jedem Messindikator eine eindeutige Kennzeichnung zugeordnet werden, an Hand deren der Messindikator eindeutig erfasst werden kann.

Dabei weist die Vorrichtung eine Befestigungsvorrichtung zur Befestigung des Sensors an der Schleifleitung auf, womit eine einfache Nachrüstung eines Schleifleitungssystems möglich ist. Dabei weist die Befestigungsvorrichtung ein auf die Schleifleitung aufsetzbares Befestigungselement auf, welches vorteilhaft eine an die Außenkontur der Schleifleitung angepasste Innenkontur aufweisen kann. Somit kann die Befestigungsvorrichtung einfach an der Schleifleitung befestigt werden. Das Befestigungselement weist einen im wesentlichen U-förmigen Querschnitt mit zwei Befestigungsschenkeln auf, welche in der montierten Stellung die Schleifleitung umgreifen. Dabei können die Befestigungsschenkel vorteilhaft an ihren freien Enden erste Rastmittel zur Verbindung mit entsprechend ausgebildeten zweiten Rastgegenmitteln der Schleifleitung aufweisen, um den sicheren Halt des Sensors an der Schleifleitung zu gewährleisten.

In einer vorteilhaften Ausgestaltung kann der Sensor an einem den Schleifkontakt tragenden Stromabnehmer angeordnet sein. Insbesondere kann dabei mehreren an dem Stromabnehmer angeordneten, voneinander unterschiedlichen Schleifkontakten jeweils ein eigener Sensor zugeordnet sein. Bevorzugt kann jedem Schleifkontakt ein Messindikator zugeordnet sein.

Weiter kann vorteilhaft der Sensor die Annäherung oder Entfernung des Messindikators in eine verschleißbedingte, insbesondere quer zu einer Längsrichtung der Schleifleitung verlaufende Bewegungsrichtung des Schleifkontakts erfassen, welche bevorzugt auf die Schleifleitung hin verläuft.

Erfindungsgemäß ist ein eingangs genanntes Schleifleitungssystem dadurch gekennzeichnet, dass die Vorrichtung zur Erkennung des Verschleißes des Schleifkontaktes wie oben und nachfolgend sowie den Ansprüchen beschrieben ausgebildet ist. Vorteilhaft kann dabei der Sensor an der Schleifleitung und/oder der Messindikator an einem mit dem Schleifkontakt in Richtung der Schleifleitung bewegbaren Teil des Stromabnehmers angeordnet sein. Auch eine umgekehrte Anordnung kann vorteilhaft vorgesehen werden. Weiter kann bevorzugt der Sensor an dem Stromabnehmer angeordnet sein, so dass jederzeit eine Überprüfung des Verschleißes des Schleifkontakts durchgeführt werden kann, unabhängig davon, an welcher Stelle der Schleifleitung sich der Stromabnehmer gerade befindet. Bevorzugt kann dabei mehreren Schleifkontakten jeweils ein eigener Messindikator und/oder ein eigener Sensor zugeordnet werden.

Bevorzugt wird der Schleifkontakt im Betrieb dauerhaft von einem Zustellmechanismus in Richtung der Schleifleitung gehalten bzw. gedrückt, insbesondere durch eine Feder. Weiter können der Messindikator und der Sensor so zueinander angeordnet sind, dass der Messindikator durch eine verschleißbedingte Annäherung des Schleifkontakts an die Schleifleitung erst bei Überschreiten einer vorgegebenen Abnutzung des Schleifkontakts in den Messbereich des Sensors eintritt.

Erfindungsgemäß ist ein eingangs genanntes Verfahren zur Erkennung des Verschleißes eines Schleifkontaktes einer Schleifleitung dadurch gekennzeichnet, dass die Vorrichtung eine Befestigungsvorrichtung zur Befestigung des Sensors an der Schleifleitung aufweist, wobei die Befestigungsvorrichtung ein auf die Schleifleitung aufsetzbares Befestigungselement aufweist, und wobei das Befestigungselement einen im wesentlichen U-förmigen Querschnitt mit zwei Befestigungsschenkeln aufweist, welche in der montierten Stellung die Schleifleitung umgreifen .. Hierdurch kann zuverlässig die Abnutzung bestimmt werden, ohne dass eine kontaktbehaftete Auslösung des Sensors vorgesehen werden muss. Hierdurch kann auch eine einfache Nachrüstung von bestehenden Schleifleitungen vorgesehen werden. Bevorzugt kann dabei der Schwellwert für die vorgegebene Abnutzung dann überschritten werden, wenn der Messindikator ganz oder zum Teil in einen Messbereich des Sensors eintritt oder ganz oder zum Teil aus dem Messbereich austritt. Vorteilhaft kann dabei der Messindikator mit dem Schleifkontakt in Richtung der Schleifleitung bewegbar sein.

Die Erfindung wird nachfolgend anhand von detaillierten Ausführungsbeispielen mit Bezug auf die begleitenden Zeichnungen beschrieben. Diese zeigen:
- **Fig. 1**: eine schematische dreidimensionale Ansicht eines Abschnitts eines erfindungsgemäßen Schleifleitungssystems mit unverbrauchtem Schleifkontakt;
- **Fig. 2**: die Ansicht aus Fig. 1 mit weitgehend verbrauchtem Schleifkontakt;
- **Fig. 3**: eine seitliche Draufsicht auf das Schleifleitungssystem aus Fig. 1 mit unverbrauchtem Schleifkontakt;
- **Fig. 4**: eine seitliche Draufsicht auf das Schleifleitungssystem aus Fig. 2 mit weitgehend verbrauchtem Schleifkontakt;
- **Fig. 5**: eine stirnseitige Draufsicht auf das Schleifleitungssystem aus Fig. 1 mit unverbrauchtem Schleifkontakt;
- **Fig. 6**: eine stirnseitige Draufsicht auf das Schleifleitungssystem aus Fig. 2 mit weitgehend verbrauchtem Schleifkontakt;
- **Fig. 7**: eine schematische dreidimensionale Ansicht eines Abschnitts eines alternativen erfindungsgemäßen Schleifleitungssystems mit unverbrauchtem Schleifkontakt;
- **Fig. 8**: die Ansicht aus Fig. 7 mit weitgehend verbrauchtem Schleifkontakt;
- **Fig. 9**: eine seitliche Draufsicht auf das Schleifleitungssystem aus Fig. 7 mit unverbrauchtem Schleifkontakt;
- **Fig. 10**: eine seitliche Draufsicht auf das Schleifleitungssystem aus Fig. 8 mit weitgehend verbrauchtem Schleifkontakt;
- **Fig. 11**: eine stirnseitige Draufsicht auf das Schleifleitungssystem aus Fig. 7 mit unverbrauchtem Schleifkontakt;
- **Fig. 12**: eine stirnseitige Draufsicht auf das Schleifleitungssystem aus Fig. 8 mit weitgehend verbrauchtem Schleifkontakt.

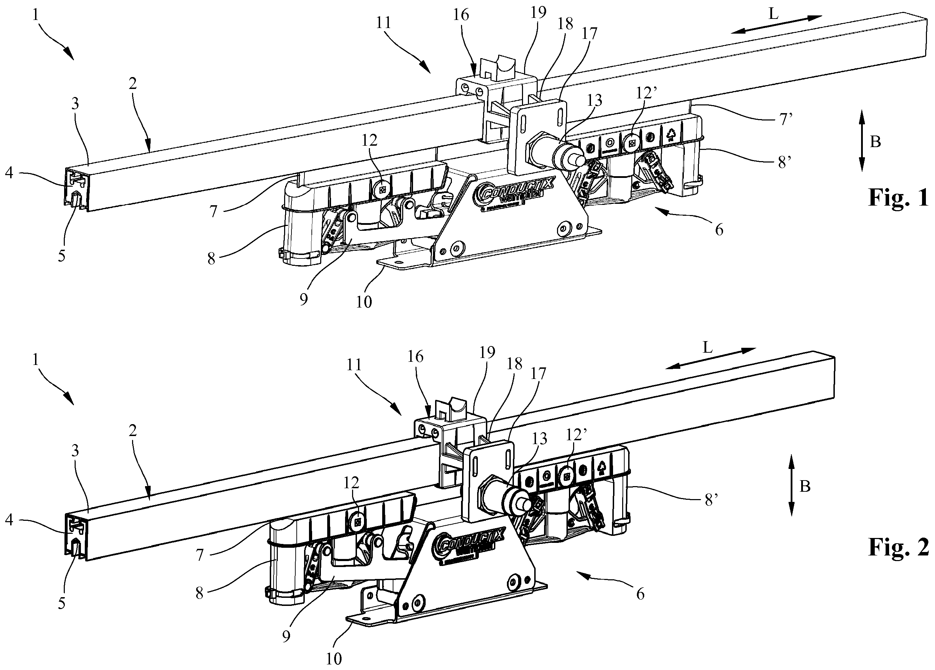

Fig. 1 zeigt eine schematische dreidimensionale Ansicht eines Abschnitts eines erfindungsgemäßen Schleifleitungssystems 1 mit einer in Längsrichtung L verlaufenden Schleifleitung 2.

Die Schleifleitung 2 weist ein längliches Isolierprofil 3 auf, welches ein längliches, elektrisch leitendes Phasenleiterprofil 4 mit eingebetteter elektrisch leitender länglicher Schleiffläche 5, bevorzugt aus Aluminium oder Stahl, umgibt.

Längs der Schleifleitung 2 ist ein Stromabnehmer 6 eines nicht zeichnerisch dargestellten elektrischen Verbrauchers verfahrbar. Dabei dient Stromabnehmer 6 zur Versorgung des längs der Schleifleitung verfahrbaren elektrischen Verbrauchers sowie der darauf installierten elektrischen Einrichtungen, beispielsweise einer Elektrohängebahn oder eines Containerkrans mit den unterschiedlichen elektrischen Fahr- und Hubantrieben.

Der Stromabnehmer 6 weist einen als Schleifkohle ausgebildeten Schleifkontakt 7 auf, der im Betrieb an der Schleiffläche 5 entlang schleift. Dabei ist der Schleifkontakt 7 an einem Schleifkontaktträger 8 angeordnet, der in an sich bekannter Weise über einen in Fig. 1 gezeigten, an sich bekannten Zustellmechanismus 9 an die Schleiffläche 5 heran und von dieser weg bewegt werden kann. Der Schleifkontakt 7 ist über eine zeichnerisch nicht dargestellte, am Schleifkontaktträger 8 angebrachte elektrische Versorgungsleitung mit dem elektrischen Verbraucher bzw. dessen elektrischen Einrichtungen verbunden, um diese mit elektrischem Strom und Spannung versorgen zu können. Ein in den Fig. 1 bis 4 rechter weiterer Schleifkontakt 7' ist spiegelbildlich zum Schleifkontakt 7 über einen entsprechenden weiteren Schleifkontaktträger 8' und einen weiteren Zustellmechanismus 9' am Stromabnehmer 6 angeordnet. Die Angaben zum Schleifkontakt 7, Schleifkontaktträger 8 bzw. Zustellmechanismus 9 sowie der weiteren zugehörigen Teile auf der in den Fig. 1 bis 4 linken Seite gelten analog auch für die entsprechenden Teile auf der rechten Seite, ggf. in seitenverkehrter Weise. Im weiteren wird die Erfindung deshalb, sofern möglich, anhand der in den Fig. 1 bis 4 linken Seite des Stromabnehmers 6 erläutert, wobei entsprechende Teile der rechten Seite mit einem Apostroph gekennzeichnet sind.

Im Betrieb wird der Schleifkontakt 7 ständig durch den Zustellmechanismus 9 an die Schleiffläche 5 angedrückt, beispielsweise über Federkraft. Der Zustellmechanismus 9 ist in einer Halterung 10 des Stromabnehmers 6 gelagert. Die Halterung 10 kann in an sich bekannter Weise an dem elektrischen Verbraucher angeordnet werden.

Die oben beschriebene Ausbildung ist dem Fachmann grundsätzlich bekannt und Bedarf keiner weiteren Ausführungen.

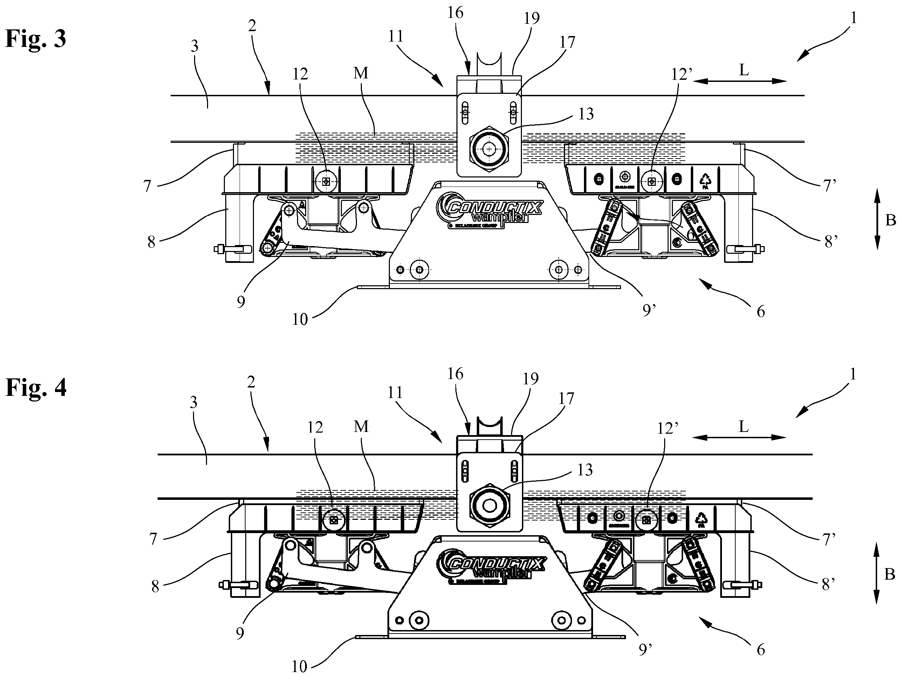

Wie jeweils in den einander gegenüber gestellten Fig. 1 und 2, 3 und 4 bzw. 5 und 6 gut erkennbar, nutzt sich der Schleifkontakt 7 unter anderen durch das Entlangschleifen an der Schleiffläche 5 im Lauf der Zeit ab. Da der Schleifkontaktträger 8 mit dem Schleifkontakt 7 über den Zustellmechanismus 9 in Richtung der Schleifleitung 2 bewegt wird, nähert sich der Schleifkontaktträger 8 von den in Fig. 1, 3 bzw. 5 gezeigten schleifleitungsfernen Positionen langsam, aber stetig an die in Fig. 2, 4 6 gezeigten Positionen an die Schleifleitung 2 an.

Diesen Umstand macht sich die Erfindung zu Nutze, um die Abnutzung des Schleifkontakts 7 rechtzeitig vor seiner vollständigen Abnutzung erkennen zu können.

Um die sukzessive Annäherung des Schleifkontakts 7 an die Schleifleitung 2 zu detektieren, ist eine als Detektionsvorrichtung 11 ausgebildete Vorrichtung zur Erkennung des Verschleißes eines Schleifkontakts einer Schleifleitung vorgesehen. Die Detektionsvorrichtung 11 umfasst dabei ein Messindikator 12, der an dem Schleifkontaktträger 8 angeordnet ist. Der Messindikator 12 bewegt sich dabei mit dem Schleifkontaktträger 8 in Bewegungsrichtung B mit, wobei er sich durch den Abrieb des Schleifkontakts 7 bedingt sukzessive an die Schleifleitung 2 annähert. Der Messindikator 12 kann an anderen Stellen oder Teilen des Stromabnehmers 6 befestigt werden, welche sich mit dem Verschleiß des Schleifkontakts 7 in Richtung der Schleifleitung 2 bewegen, beispielsweise dem Schleifkontakt 7 selbst oder dem Zustellmechanismus 9.

Zur Detektion des Messindikators 12 ist an der Schleifleitung 2 ortsfest ein Sensor 13 mit integrierter Sensorelektronik 14 und Sendeeinheit 15 mit einer Befestigungsvorrichtung 16 angebracht. Der Sensor 13 ist an einer Halteplatte 17 angeschraubt, welche über einen Auslegerarm 18 in einem seitlichen Abstand zur Schleifleitung 2 gehalten wird.

Der Auslegerarm 18 ist an einem Befestigungselement 19 angeordnet, welches eine an die Außenkontur der Schleifleitung 2 respektive des Isolierprofils 3 angepasste Innenkontur auf weist. Vorliegend weist das Befestigungselement 19 ein im Querschnitt im wesentlichen U-förmiges Profil mit Befestigungsschenkeln 20, 20' auf. An ihren freien Enden weisen die Befestigungsschenkel 20, 20' jeweils erste Rastmittel 21, 21' auf, welche in entsprechende Rastnuten 22, 22' des Isolierprofils 3 eingreifen. Hierdurch wird einerseits ein sicherer Sitz des Befestigungselements 19 an der Schleifleitung 2 bei gleichzeitig einfacher Montage bzw. Demontage des Befestigungselements 19 an der Schleifleitung 2 ermöglicht. Ggf. können die Rastnuten 22, 22' auch an den Befestigungsschenkeln 20, 20' und die Rastmittel 21, 21' an dem Isolierprofil 3 angeordnet werden.

Ebenso sind anstelle der oben beschriebenen und in den Zeichnungen dargestellten auch andere Befestigungsmöglichkeiten denkbar, um den Sensor 13 an der Schleifleitung 2 zu befestigen.

Weiter ist der Sensor 13 in an sich bekannter Weise über die Sendeeinheit 15 mit einer Steuerung des Schleifleitungssystems 1 verbunden, an welches die Signale des Sensors 13 übermittelt werden. Dabei kann in der Sensorelektronik 14 bereits eine Vorauswertung der Sensorsignale erfolgen,

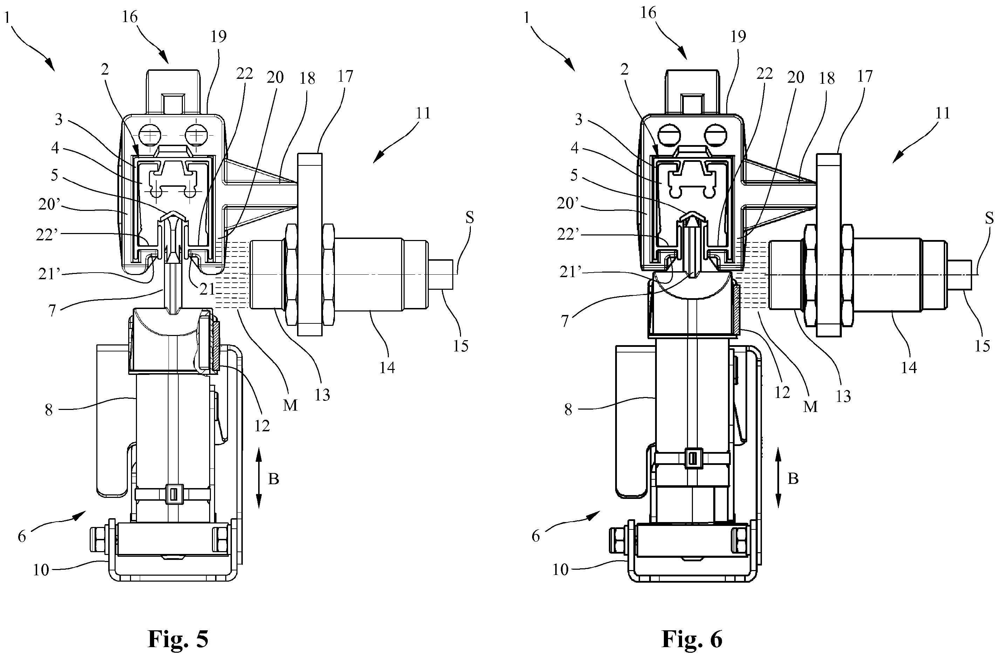

Zur Erfassung des Messindikators 12 durch den Sensor 13 sind diese so aufeinander abgestimmt, dass das Messsignal des Sensors 13 durch den Messindikator 12, und insbesondere durch dessen Abstand zur Schleifleitung 2 beeinflussbar ist. Der Messindikator 12 wird im vorliegenden Ausführungsbeispiel in einer solchen Position am Schleifkontaktträger 8 angeordnet, dass er erst dann vom Sensor 13 erfasst werden kann, wenn die vorgegebene Abnutzung des Schleifkontakts 7 erreicht ist und der Messindikator 12 in den angedeuteten Messbereich M des Sensors 13 eintritt. Dabei ist der Messbereich M in den Fig. 3 und 4 streifenförmig vom Sensor 13 zum Messindikator 12 hin verlängert, während er tatsächlich nur im Bereich des Sensors 13 kreisförmig in Richtung Schleifleitung 2 abgestrahlt wird, wie in Fig. 5 und 6 angedeutet. Die in Fig. 3 und 4 gezeigte streifenförmige Verlängerung des Messbereichs M dient nur zur Verdeutlichung, dass der Messindikator 12 in Fig. 3 außerhalb, insbesondere unterhalb des Messbereichs M verläuft, während der Messindikator 12 in Fig. 3 bereits in den Messbereich eingetreten ist und somit vom Sensor 13 erfasst werden kann. Entsprechend endet der Messbereich in Fig. 5 und 6 auch auch nicht abrupt auf der in den Zeichnungen linken Seite, sondern reicht noch etwas in horizontaler Richtung über das gezeichnete linke Ende hinaus.

Gegebenfalls können Messindikator 12 und Sensor 13 auch so positioniert werden, dass der Messindikator 12 bereits früher, in den Zeichnungen also tieferen Stellung des Schleifkontaktträgers 8 erfasst werden kann, ein Warnsignal aber erst dann ausgegeben wird, wenn dass Sensorsignal einen vorgegebenen Schwellwert für die vorgegebene Abnutzung überschreitet ausgibt. Beispielsweise kann der Schwellwert so gewählt sein, dass eine bestimmte Signalstärke des erfassten Sensorsignals vorhanden sein muss, um sicher die Abnutzung des Schleifkontakts 7 zu detektieren.

Im vorliegenden Fall handelt es sich bei dem Messindikator 12 um einen an sich bekannten RFID-Transponder, der vorzugsweise passiv ausgebildet ist, also selbst keine Energiequelle enthält. Entsprechend ist der Sensor 13 als RFID-Lesegerät ausgebildet, um den RFID-Transponder 12 detektieren zu können. Da die Reichweite des Sensors 13 gering ist, kann der Sensor 13 bei der Fig. 5 gezeigten sensorfernen Position des RFID-Transponders 12 diesen noch nicht detektieren, sondern erst bei einem seitlichen Eindringen des Messindikators 12 in den Sende-/Empfangsbereich des Sensors 13, hier also von in Fig. 4 bzw. 6 unten.

Auch könnte die Sensorachse S des in Fig. 1 bis 6 gezeigten Sensors 13 nicht wie dort gezeigt waagrecht, sondern senkrecht, also in Bewegungsrichtung B verlaufen. Der Messindikator 12 könnte dann bevorzugt seitlich am Schleifkontaktträger 8 entsprechend um 90° gekippt angeordnet werden, so dass die gesamte Messanordnung um 90° gekippt wäre. Dann würde bei zunehmendem Verschleiß des Schleifkontakts 7 der Abstand zwischen Sensor 13 und Messindikator 12 in Bewegungsrichtung B des Zustellmechanismus 9 abnehmen. Gelangt der Messindikator 12 dann in den Messbereich M des Sensors 13, wäre dies wieder der Auslöser für das Warnsignal an die Steuerung.

Bei dieser Ausführung kann bei ausreichend groß gewähltem Messbereich und Empfindlichkeit des Sensors 13 der Sensor 13 auch oberhalb bzw. auf der Schleifleitung 2 angeordnet und nach unten ausgerichtet werden, so dass er den vorbeifahrenden Messindikator 12 unter sich erfassen kann, sobald der Schleifkontaktträger 8 sich ausreichend nahe an den Sensor 13 angenähert hat. Dabei kann vorteilhaft der Messindikator 12 auch nach oben, also um 90° gedreht am Stromabnehmer 6 angeordnet sein, und insbesondere dann auch am Schleifkontaktträger 8 oder dem Zustellmechanismus 9 angeordnet sein.

Auch andere Ausrichtungen des Sensors 13 zum Messindikator 12 sind möglich, z.B. eine seitlich schräge Ausrichtungen.

Außerhalb des Schutzbereichs der Ansprüche können anstelle des hier beschriebenen Messprinzips über einen RFID-Transponder mit zugehörigem RFID-Lesegerät auch andere Messverfahren verwendet werden, welche die Annäherung des Schleifkontaktträgers 8 und somit den Messindikators 12 an die Schleifleitung 2 detektieren. Beispielsweise könnte ein induktiver oder kapazitiver Näherungssensor verwendet werden. Gegebenenfalls könnte der Messindikator 12 auch in den Schleifkontakt 7 oder in eines der mit dem Schleifkontakt 7 beweglichen Teile des Stromabnehmers 6 integriert werden, um ihn besser gegen äußere Einflüsse schützen zu können.

Sofern der Messindikator 12 aber einen RFID-Transponder oder einen anderen mit Daten beschreibbarer Datenträger umfasst, der von dem Sensor 13 ausgelesen werden kann, können zusätzlich auch Daten zu dem verwendeten Schleifkontakt 7 auf dem Messindikator 12 abgelegt werden, welche dann bei ausreichender Annäherung an den Sensor 13 ausgelesen und an die Steuerung übermittelt werden, beispielsweise Angaben zu den Eigenschaften des Schleifkontakts 7 wie Größe, Material etc. Dann könnte einfach und frühzeitig Ersatz für den abgenutzten Schleifkontakt 7 beschafft und zum Austausch bereitgestellt werden. Dies ist insofern vorteilhaft, da bei manchen Schleifleitungssystemen für die Leistungsübertragung andere Schleifkontakte verwendet werden als beispielsweise für zur Erdung vorgesehene Schleifkontakte. Auch bei Stromabnehmern mit mehreren Schleifkontakten könnten dann auf dem Messindikator 12 bzw. den den einzelnen Schleifkontakten zugeordneten Messindikatoren Zusatzinformationen eingespeichert werden, um welchen Schleifkontaktträger auf welchem Stromabnehmer es sich nun genau handelt. Dies würde den Austausch eines abgenutzten Schleifkontakts weiter vereinfachen.

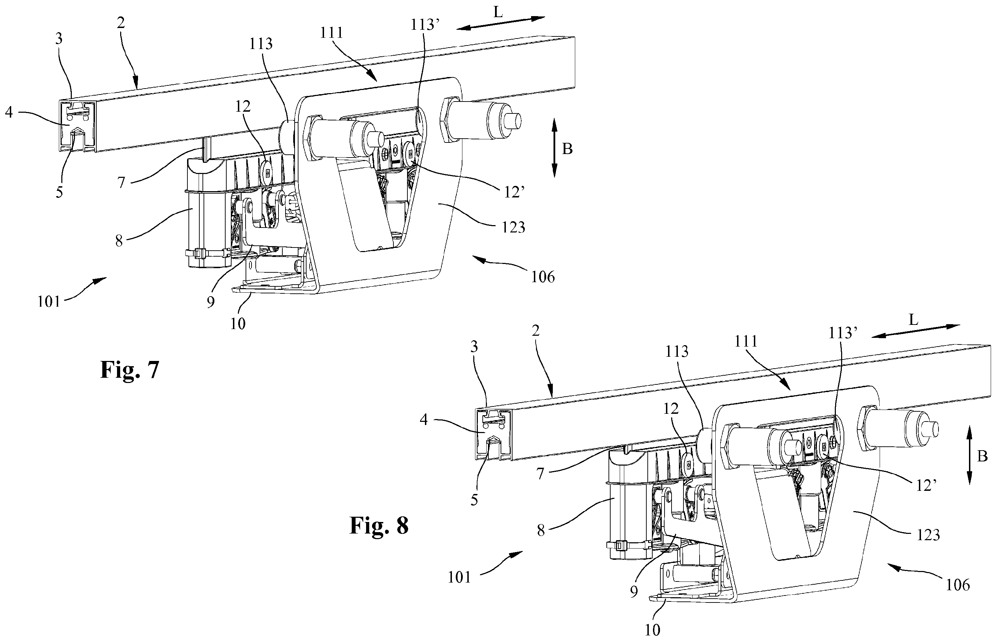

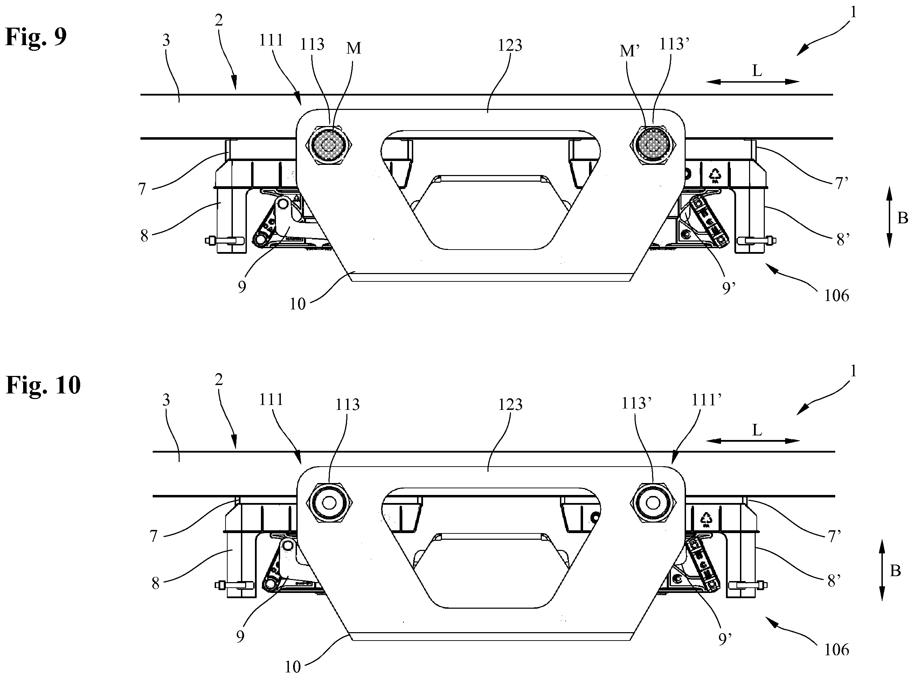

Die Fig. 7 bis 12 zeigen eine alternative Ausgestaltung eines nicht erfindungsgemäßen Schleifleitungssystems 101 außerhalb des Schutzumfanges der Ansprüche , welches sich im wesentlichen dadurch von dem in Fig. 1 bis 6 gezeigten unterscheidet, dass nicht der eine Sensor 13 an der Schleifleitung 2 angeordnet ist, sondern zwei entsprechende Sensoren 113, 113' direkt an einem entsprechend angepassten Stromabnehmer 106. Soweit möglich, werden deshalb wieder für gleiche Teile wie bei der in Fig. 1 bis 6 gezeigten Ausgestaltung gleiche Bezugszeichen und Bezeichnungen verwendet, ggf. ergänzt um eine führende 100, also beispielsweise "106" für den alternativen Stromabnehmer anstelle von "6" für den Stromabnehmer aus Fig. 1 bis 6. Ansonsten gelten die oben zu dem ersten Ausführungsbeispiel in Fig. 1 bis 6 gemachten Ausführungen entsprechend, insbesondere was die Funktionsweise und Ausgestaltung der Sensoren 113, 113' und auch der Messindikatoren 12, 12' betrifft.

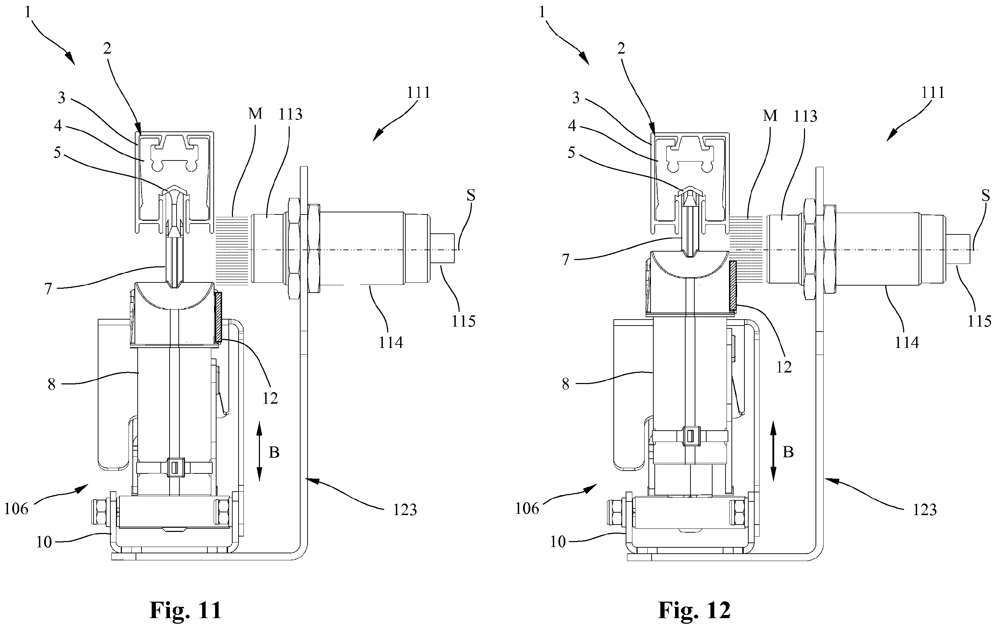

Der Stromabnehmer 106 weist hierzu eine Befestigungsvorrichtung in Form eines hier sich nach oben aufweitenden, trapezförmigen, teilweise ausgeschnittenen und von der Halterung 10 nach oben in Bewegungsrichtung B zur Schleifleitung 2 hin verlaufenden Halteblechs 123 auf. Daran sind die Sensoren 113, 113' so angeordnet, dass der Messindikator 12 bei dem in Fig. 11 gezeigten, noch kaum verbrauchten Schleifleitungskontakt 7 außerhalb des Messbereichs M des Sensors 113 liegt. Bewegt sich der Schleifkontaktträger 8 dann mit zunehmend verbrauchtem Schleifkontakt 7 dauerhaft in Richtung der Schleifleitung 2 hin, so wandert der Messindikator 12 wieder in den Messbereich M des Sensors 113, so dass der verschlissenem Schleifkontakt 7 erkannt werden kann. Entsprechendes gilt auch für den in Fig. 7 bis 10 rechten, weiteren Sensor 113' für den rechten Schleifleitungskontaktsträger 8'.

Ansonsten gelten die oben zu dem ersten Ausführungsbeispiel in Fig. 1 bis 6 gemachten Ausführungen entsprechend. Insbesondere kann bei dem in Fig. 7 bis 12 gezeigten Ausführungsbeispiel der Sensor 113 auch so angeordnet werden, dass der Messindikator 12 bei unverbrauchtem Schleifkontakt 7 im Messbereich M des Sensors 113 liegt. Erst mit dem zunehmenden Verschleiß des Schleifkontakts 7 wandert dieser dann nach oben aus dem Messbereich M des Sensors 113 heraus.

Die in Fig. 7 bis 12 gezeigte Variante außerhalb des Schutzumfanges der Ansprüche weist gegenüber der in Fig. 1 bis 6 gezeigten Ausführung den Vorteil auf, dass die Position und somit der Verschleiß der Schleifleitungskontakte 7, 7 ständig überwacht werden kann, und nicht nur an den Positionen der Schleifleitung 2, an der der Sensor 13 angeordnet ist. Gerade bei mehreren 100 m langen Schleifleitungen 2 besteht durchaus die Möglichkeit, dass der elektrische Verbraucher längere Zeit nur in einem relativ kurzen Bereich längs der Schleifleitung 2 verfährt. Ist dort kein Sensor 13 vorhanden, so kann der Verschleiß der Schleifleitungskontakte 7, 7' dort nicht detektiert werden. Um dies zu vermeiden, müssen dann mehrere Sensoren 13 über die Länge der Schleifleitung 2 verteilt, bevorzugt in regelmäßigen Abständen, angeordnet werden, was mit höheren Kosten und höherem Aufwand, beispielsweise für die Verkabelung verbunden ist. Im Gegensatz dazu muss bei der in Fig. 7 bis 12 gezeigten Lösung lediglich für jeden Schleifkontakt 7, 7' ein Sensor 113, 113' vorgesehen werden.

Anstelle oder zusätzlich zu der in den Fig. 7 bis 12 gezeigten berührungslosen Detektion kann bei dieser Ausführung die Detektion des Verschleißes der Schleifkontakt 7, 7' auch auf andere Weise erfasst werden, beispielsweise könnte ein oder mehrere Schalter vorgesehen werden, welche so am Stromabnehmer 106 angeordnet sind, dass sie beim Näherkommen des Schleifleitungskontakts 7 bzw. eines Teils des Stromabnehmers 106, welches sich mit dem Schleifleitungskontakt 7 zur Schleifleitung 2 hin bewegt, ausgelöst werden. Alternativ oder zusätzlich könnten auch Schalter vorgesehen werden, welche aktiviert werden und ein Warnsignal ausgeben, wenn sich der Schleifleitungskontakt 7 bzw. ein Teil des Stromabnehmers 106, welcher sich mit dem Schleifleitungskontakt 7 zur Schleifleitung 2 hin bewegt, vom Schalter entfernt.

In einer nicht beanspruchten und nicht gezeichneten Ausgestaltung außerhalb des Schutzumfanges der Ansprüche können auch die Positionen des Sensors 13 bzw. der Sensoren 113, 113' und der Messindikatoren 12 bzw. 12' vertauscht werden, also der Sensor 13 bzw. die Sensoren 113, 113' an einem sich mit dem Verschleiß des Schleifkontakts 7 an die Schleifleitung 2 annähernden Teil des Stromabnehmers 6 bzw. 106 angebracht werden, während die Messindikatoren 12 bzw. 12' an der Schleifleitung 2 angeordnet wären. Sobald der Sensor 13 bzw. die Sensoren 113, 113' sich dann so nahe an die Schleifleitung 2 angenähert haben, dass der dort angeordnete Messindikator 12 bzw. 12' in den Messbereich M des Sensors 13 bzw. der Sensoren 113, 113' eindringt, würde wieder ein Signal ausgegeben.

Dies weist jedoch den Nachteil auf, dass für jeden Schleifkontakt 7, 7' ein eigener Sensor vorgesehen werden müsste, während insbesondere bei dem Fig. 1 bis 6 dargestellten Ausführungsbeispiel lediglich ein Sensor 13 für das gesamte Schleifleitungssystem 1 vorgesehen werden muss, und an den Schleifkontakten 7, 7' lediglich die deutlich kleineren, robusteren und auch kostengünstigeren Messindikatoren 12, 12'.

## Patentansprüche

1. Vorrichtung (11) zur Erkennung des Verschleißes eines längs einer Schleifleitung (2) verfahrbaren Schleifkontakts (7, 7'), mit einem Sensor (13; 113, 113') und einem zur Erfassung durch den Sensor (13; 113, 113') ausgebildeten Messindikator (12; 112, 112'), wobei sich der Sensor (13; 113, 113') und der Messindikator (12; 112, 112') durch eine verschleißbedingte Verkürzung des Schleifkontakts (7, 7') aneinander annähern oder voneinander entfernen, wobei der Sensor (13; 113, 113') zur berührungslosen Erfassung des Messindikators (12; 112, 112') ausgebildet ist, und wobei der Sensor (13; 113, 113') ein Schreib- und/oder Lesegerät, nämlich ein RFID-Schreib- und/oder Lesegerät, und der Messindikator (12; 112, 112') einen berührungslos auslesbaren und/oder beschreibbaren Datenträger, nämlich einen RFID-Transponder, aufweist, **dadurch gekennzeichnet, dass** die Vorrichtung eine Befestigungsvorrichtung (16) zur Befestigung des Sensors (13) an der Schleifleitung (2) aufweist, wobei die Befestigungsvorrichtung (16) ein auf die Schleifleitung (2) aufsetzbares Befestigungselement (19) aufweist, und wobei das Befestigungselement (19) einen im wesentlichen U-förmigen Querschnitt mit zwei Befestigungsschenkeln (20, 20') aufweist, welche in der montierten Stellung die Schleifleitung (2) umgreifen.

2. Vorrichtung nach Anspruch 1, **dadurch gekennzeichnet, dass** das Befestigungselement (19) eine an die Außenkontur der Schleifleitung (2) angepasste Innenkontur aufweist.

3. Vorrichtung nach Anspruch 1 oder 2, **dadurch gekennzeichnet, dass** die Befestigungsschenkel (20, 20') an ihren freien Enden erste Rastmittel (21, 21') zur Verbindung mit entsprechend ausgebildeten zweiten Rastgegenmitteln (22, 22') der Schleifleitung (2) aufweisen.

4. Vorrichtung nach Anspruch 1, **dadurch gekennzeichnet, dass** der Sensor (113, 113') an einem den Schleifkontakt (7, 7') tragenden Stromabnehmer (106) angeordnet ist.

5. Vorrichtung nach Anspruch 4, **dadurch gekennzeichnet, dass** mehreren an dem Stromabnehmer (106) angeordneten, voneinander unterschiedlichen Schleifkontakten (7, 7') jeweils ein eigener Sensor (113, 113') zugeordnet ist.

6. Schleifleitungssystem (1; 101) mit einer Schleifleitung (2) und mindestens einem an der Schleifleitung (2) in deren Längsrichtung (L) verfahrbaren Stromabnehmer (6; 106) mit mindestens einem Schleifkontakt (7, 7') zur Kontaktierung mit mindestens einem elektrischen leitenden Leiterprofil (4) der Schleifleitung (2) zur Versorgung eines längs der Schleifleitung (2) verfahrbaren elektrischen Verbrauchers, wobei am Schleifleitungssystem (1; 101) eine Vorrichtung (11; 111) zur Erkennung des Verschleißes des Schleifkontaktes (7, 7') vorgesehen ist, **dadurch gekennzeichnet, dass** die Vorrichtung (11; 111) zur Erkennung des Verschleißes des Schleifkontaktes (7, 7') nach einem der Ansprüche 1 bis 5 ausgebildet ist.

7. Schleifleitungssystem (1) nach Anspruch 6, **dadurch gekennzeichnet, dass** der Sensor (13) an der Schleifleitung (2) oder an dem Stromabnehmer (106) angeordnet ist.

8. Schleifleitungssystem (1) nach Anspruch 6 oder 7, **dadurch gekennzeichnet, dass** der Messindikator (12; 112, 112') an einem mit dem Schleifkontakt (7, 7') in Richtung (B) der Schleifleitung (2) bewegbaren Teil des Stromabnehmers (6, 106) angeordnet ist.

9. Schleifleitungssystem (1) nach einem der Ansprüche 6 bis 8, **dadurch gekennzeichnet, dass** der Messindikator (12; 112, 112') und der Sensor (13; 113, 113') so zueinander angeordnet sind, dass der Messindikator (12; 112, 112') durch eine verschleißbedingte Verkürzung des Schleifkontakts (7, 7') an die Schleifleitung (2) erst bei Überschreiten einer vorgegebenen Abnutzung des Schleifkontakts (7, 7') in einen Messbereich (M) des Sensors (13; 113, 113') eintritt.

10. Verfahren zur Erkennung des Verschleißes eines Schleifkontaktes (7, 7') einer Schleifleitung (2) mit einem Sensor (13; 113, 113') und einem zur Erfassung durch den Sensor (13; 113, 113') ausgebildeten, mit dem Schleifkontakt (7, 7') bewegbaren Messindikator (12; 112, 112'), wobei der Sensor (13; 113, 113') eine Annäherung des Messindikators (12; 112, 112') an den Sensor (13; 113, 113') berührungslos erfasst, und bei Überschreiten eines Schwellwerts für eine vorgegebene Abnutzung des Schleifkontakts (7, 7') ein Warnsignal ausgibt, wobei der Sensor (13; 113, 113') ein Schreib- und/oder Lesegerät, nämlich ein RFID-Schreib- und/oder Lesegerät, und der Messindikator (12; 112, 112') einen berührungslos auslesbaren und/oder beschreibbaren Datenträger, nämlich einen RFID-Transponder, aufweist, **dadurch gekennzeichnet, dass** die Vorrichtung eine Befestigungsvorrichtung (16) zur Befestigung des Sensors (13) an der Schleifleitung (2) aufweist, wobei die Befestigungsvorrichtung (16) ein auf die Schleifleitung (2) aufsetzbares Befestigungselement (19) aufweist, und wobei das Befestigungselement (19) einen im wesentlichen U-förmigen Querschnitt mit zwei Befestigungsschenkeln (20, 20') aufweist, welche in der montierten Stellung die Schleifleitung (2) umgreifen.

11. Verfahren nach Anspruch 10, **dadurch gekennzeichnet, dass** der Schwellwert für die vorgegebene Abnutzung überschritten wird, wenn der Messindikator (12; 112, 112') ganz oder zum Teil in einen Messbereich (M) des Sensors (13; 113, 113') eintritt oder ganz oder zum Teil aus dem Messbereich (M) austritt.

12. Verfahren nach Anspruch 10 oder 11, **dadurch gekennzeichnet, dass** der Messindikator (12; 112, 112') mit dem Schleifkontakt (7, 7') in Richtung (B) der Schleifleitung (2) bewegbar ist.

## Claims

1. Device (11) for detecting the wear of a sliding contact (7, 7') that can be moved along a conductor rail (2), said device (11) comprising a sensor (13; 113, 113') and a measuring indicator (12; 112, 112') configured for detection by the sensor (13; 113, 113'), wherein the sensor (13; 113, 113') and the measuring indicator (12; 112, 112') moving close to or away from one another due to a wear-induced shortening of the sliding contact (7, 7'), wherein the sensor (13; 113, 113') is configured for contactless detection of the measuring indicator (12; 112, 112') and wherein the sensor (13; 113, 113') comprises a read and/or write device, namely an RFID read and/or write device, and the measuring indicator (12; 112, 112') comprises a data carrier that can be read and/or written to by contactless means, namely an RFID transponder, **characterized in that** the device comprises a mounting device (16) for mounting the sensor (13) on the conductor rail (2), wherein the mounting device (16) comprises a mounting element (19) that can be mounted on the conductor rail (2), and wherein the mounting element (19) has a substantially U-shaped cross-section with two mounting legs (20, 20') that, in the mounted position, encompass the conductor rail (2).

2. Device according to claim 1, **characterized in that** the mounting element (19) has an inner contour adapted to the outer contour of the conductor rail (2)

3. A device according to claim 1 or 2, **characterized in that** the mounting legs (20, 20') comprise, at their free ends, first locking means (21, 21') for engagement with correspondingly configured second locking counter means (22, 22') of the conductor rail (2).

4. A device according to claim 1, **characterized in that** the sensor (113, 113') is arranged on a current collector (106) that carries the sliding contact (7, 7').

5. A device according to claim 4, **characterized in that** each of a plurality of different sliding contacts (7, 7') arranged on the current collector (106) is associated with its own sensor (113, 113').

6. A conductor rail system (1; 101) comprising a conductor rail (2) and at least one current collector (6; 106) being movable along and in a longitudinal direction (L) of the conductor rail (2), the current collector (6; 106) having at least one sliding contact (7, 7') for contacting at least one electrically conductive conductor profile (4) of the conductor rail (2) for supplying power to an electrical consumer movable along the conductor rail (2), wherein a device (11; 111) for detecting the wear of the sliding contact (7, 7') is provided on the conductor rail system (1; 101), **characterized in that** the device (11; 111) for detecting the wear of the sliding contact (7, 7') is configured according to one of claims 1 through 5.

7. A conductor rail system (1) according to claim 6, **characterized in that** the sensor (13) is arranged on the conductor rail (2) or on the current collector (106).

8. A conductor rail system (1) according to claim 6 or 7, **characterized in that** the measuring indicator (12; 112, 112') is arranged on a part of the current collector (6, 106) that is movable with the sliding contact (7, 7') in a direction (B) of the conductor rail (2).

9. Conductor rail system (1) according to any one of claims 6 through 8, **characterized in that** the measuring indicator (12; 112, 112') and the sensor (13; 113, 113') are arranged relative to one another such that the measuring indicator (12; 112, 112') enters a measuring range (M) of the sensor (13; 113, 113') only when a predetermined level of wear of the sliding contact (7, 7') is exceeded, due to a wear-induced shortening of the sliding contact (7, 7') relative to the conductor rail (2).

10. Method for detecting the wear of a sliding contact (7, 7') of a conductor rail (2), said conductor rail (2) comprising a sensor (13; 113, 113') and a measuring indicator (12; 112, 112') configured for detection by the sensor (13; 113, 113') and movable together with the sliding contact (7, 7'), wherein the sensor (13; 113, 113') detects the approach of the measuring indicator (12; 112, 112') to the sensor (13; 113, 113') by contactless means and, when a threshold value for a predetermined degree of wear of the sliding contact (7, 7') is exceeded, emits a warning signal, wherein the sensor (13; 113, 113') comprises a read and/or write device, namely an RFID read and/or write device, and the measuring indicator (12; 112, 112') comprises a data carrier that can be read and/or written to by contactless means, namely an RFID transponder, **characterized in that** the device comprises a mounting device (16) for mounting the sensor (13) on the conductor rail (2), wherein the mounting device (16) comprises a mounting element (19) that can be mounted on the conductor rail (2), and wherein the mounting element (19) has a substantially U-shaped cross-section with two mounting legs (20, 20') that, in the mounted position, encompass the conductor rail (2).

11. Method according to claim 10, **characterized in that** the threshold value for the predetermined wear is exceeded when the measuring indicator (12; 112, 112') enters, in whole or in partial, a measurement range (M) of the sensor (13; 113, 113') or exits, in whole or in partial, the measurement range (M).

12. Method according to claim 10 or 11, **characterized in that** the measuring indicator (12; 112, 112') is movable with the sliding contact (7, 7') in the direction (B) of the sliding conductor rail (2).

## Revendications

1. Dispositif (11) permettant d'identifier l'usure d'un contact à frottement (7, 7') pouvant se déplacer le long d'une ligne de contact (2), comportant un capteur (13 ; 113, 113') et un indicateur de mesure (12 ; 112, 112') configuré pour être détecté par le capteur (13 ; 113, 113'), dans lequel le capteur (13 ; 113, 113') et l'indicateur de mesure (12 ; 112, 112') se rapprochent ou s'éloignent l'un de l'autre en raison d'un raccourcissement du contact à frottement (7, 7') dû à l'usure, dans lequel le capteur (13 ; 113, 113') est configuré pour détecter l'indicateur de mesure (12 ; 112, 112') sans contact, et dans lequel le capteur (13 ; 113, 113') présente un lecteur et/ou enregistreur, à savoir un lecteur et/ou enregistreur RFID, et l'indicateur de mesure (12 ; 112, 112') présente un support de données pouvant être lu et/ou enregistré sans contact, à savoir un transpondeur RFID,
**caractérisé en ce que** le dispositif présente un dispositif de fixation (16) permettant de fixer le capteur (13) à la ligne de contact (2), dans lequel le dispositif de fixation (16) présente un élément de fixation (19) pouvant être placé sur la ligne de contact (2), et dans lequel l'élément de fixation (19) présente une section transversale sensiblement en forme de U comportant deux branches de fixation (20, 20') qui, en position montée, enserrent la ligne de contact (2).

2. Dispositif selon la revendication 1, **caractérisé en ce que** l'élément de fixation (19) présente un contour intérieur adapté au contour extérieur de la ligne de contact (2).

3. Dispositif selon la revendication 1 ou 2, **caractérisé en ce que** les branches de fixation (20, 20') présentent, au niveau de leurs extrémités libres, de premiers moyens d'encliquetage (21, 21') destinés à être reliés à de seconds moyens d'encliquetage (22, 22') de la ligne de contact (2) et réalisés de manière correspondante.

4. Dispositif selon la revendication 1, **caractérisé en ce que** le capteur (113, 113') est disposé sur un collecteur de courant (106) portant le contact à frottement (7, 7').

5. Dispositif selon la revendication 4, **caractérisé en ce que** respectivement un capteur (113, 113') propre est associé à plusieurs contacts à frottement (7, 7') différents les uns des autres et disposés sur le collecteur de courant (106).

6. Système à ligne de contact (1 ; 101) comportant une ligne de contact (2) et au moins un collecteur de courant (6 ; 106) pouvant se déplacer sur la ligne de contact (2) dans sa direction longitudinale (L) et comportant au moins un contact à frottement (7, 7') destiné à entrer en contact avec au moins un profilé conducteur (4) électroconducteur de la ligne de contact (2) permettant d'alimenter un consommateur électrique pouvant se déplacer le long de la ligne de contact (2), dans lequel un dispositif (11 ; 111) est prévu sur le système à ligne de contact (1 ; 101) pour l'identification de l'usure du contact à frottement (7, 7'), **caractérisé en ce que** le dispositif (11 ; 111) permettant d'identifier l'usure du contact à frottement (7, 7') est réalisé selon l'une des revendications 1 à 5.

7. Système à ligne de contact (1) selon la revendication 6,
**caractérisé en ce que** le capteur (13) est disposé sur la ligne de contact (2) ou sur le collecteur de courant (106).

8. Système à ligne de contact (1) selon la revendication 6 ou 7,
**caractérisé en ce que** l'indicateur de mesure (12 ; 112, 112') est disposé sur une partie du collecteur de courant (6, 106) pouvant se déplacer avec le contact à frottement (7, 7') dans la direction (B) de la ligne de contact (2).

9. Système à ligne de contact (1) selon l'une des revendications 6 à 8,
**caractérisé en ce que** l'indicateur de mesure (12 ; 112, 112') et le capteur (13 ; 113, 113') sont disposés l'un par rapport à l'autre de sorte que l'indicateur de mesure (12 ; 112, 112') ne pénètre dans une zone de mesure (M) du capteur (13 ; 113, 113') en raison d'un raccourcissement du contact à frottement (7, 7') dû à l'usure sur la ligne de contact (2) qu'une fois dépassée une usure prédéfinie du contact à frottement (7, 7').

10. Procédé permettant d'identifier l'usure d'un contact à frottement (7, 7') d'une ligne de contact (2) comportant un capteur (13 ; 113, 113') et un indicateur de mesure (12 ; 112, 112') pouvant se déplacer avec le contact à frottement (7, 7') et configuré pour être détecté par le capteur (13 ; 113, 113'), dans lequel le capteur (13 ; 113, 113') détecte un rapprochement de l'indicateur de mesure (12 ; 112, 112') du capteur (13 ; 113, 113') sans contact et émet un signal d'avertissement lors du dépassement d'une valeur seuil d'une usure prédéfinie du contact à frottement (7, 7'), dans lequel le capteur (13 ; 113, 113') présente un lecteur et/ou enregistreur, à savoir un lecteur et/ou enregistreur RFID, et l'indicateur de mesure (12 ; 112, 112') présente un support de données pouvant être lu et/ou enregistré sans contact, à savoir un transpondeur RFID,
**caractérisé en ce que** le dispositif présente un dispositif de fixation (16) permettant de fixer le capteur (13) à la ligne de contact (2), dans lequel le dispositif de fixation (16) présente un élément de fixation (19) pouvant être placé sur la ligne de contact (2), et dans lequel l'élément de fixation (19) présente une section transversale sensiblement en forme de U comportant deux branches de fixation (20, 20') qui, en position montée, enserrent la ligne de contact (2).

11. Procédé selon la revendication 10, **caractérisé en ce que** la valeur seuil de l'usure prédéfinie est dépassée lorsque l'indicateur de mesure (12 ; 112, 112') pénètre entièrement ou partiellement dans une zone de mesure (M) du capteur (13 ; 113, 113') ou sort entièrement ou partiellement de la zone de mesure (M).

12. Procédé selon la revendication 10 ou 11, **caractérisé en ce que** l'indicateur de mesure (12 ; 112, 112') peut se déplacer avec le contact à frottement (7, 7') dans la direction (B) de la ligne de contact (2).
